# DEMANDE DE BREVET EUROPEEN

(11) **EP 1 207 641 A2**
(43) Date de publication de la demande: **22.05.2002**
(21) Numéro de dépôt: 02003866.7
(22) Date de dépôt: 21.04.1999
(51) Int. Cl.: H04J 3/06

(54) **Procédé de synchronisation dans un réseau de communication et appareils de mise en oeuvre**

(30) Priorité: 21.04.1998 FR 9804982
(62) Demande divisionnaire de: 99915806.6
(71) Demandeur: THOMSON multimedia, 92100 Boulogne Billancourt (FR)
(72) Inventeur: Straub, Gilles, 35690 Acigne (FR); Dore, Renaud, 35000 Rennes (FR); Bürklin, Helmut, 35000 Rennes (FR); Lopez, Patrick, 35450 Livré s/Changeon (FR); Demoulin, Vincent, 35137 Pleumeleuc (FR)
(74) Mandataire: Kohrs, Martin

(57) **Abrégé**

L'invention concerne un procédé de synchronisation dans un réseau de communication comportant au moins deux bus interconnectés par un réseau de communication sans fil, chaque bus étant relié au réseau de communication sans fil par un portail.

Le procédé comporte les étapes de détermination d'un portail dit serveur de cycle et dont une horloge propre servira de référence aux autres portails ; d'émission par chaque portail d'un signal de synchronisation à un instant prédéterminé par rapport au début d'une trame et caractéristique de chaque portail, ladite trame étant définie par rapport à l'horloge interne propre de chaque portail, ledit signal de synchronisation étant réalisé par l'insertion d'une fenêtre de contrôle ; de détection par chaque portail des fenêtres de contrôle d'autres portails et de sélection d'une des fenêtres détectées pour la synchronisation d'une horloge propre du portail récepteur avec l'horloge du portail serveur de cycle, ladite fenêtre sélectionnée correspondant à un portail dont l'horloge est déjà synchronisée avec celle du portail serveur de cycle.

L'invention a aussi pour objet des appareils récepteur et émetteur mettant en oeuvre le procédé.

## Description

L'invention concerne un procédé de synchronisation d'appareils connectés à un réseau de communication comportant des liaisons sans fil. Elle s'applique notamment dans le cadre d'un réseau de communication domestique. L'invention concerne également des appareils de mise en oeuvre de ce procédé.

Dans un bus de type IEEE 1394 décrit dans le standard IEEE 1394-1995, chaque appareil ('noeud') relié au bus estampille les paquets isochrones qu'il émet avec une information temporelle indiquant à quel instant le paquet doit être restitué par l'appareil récepteur.

Chaque appareil (ou 'noeud') relié au bus comporte un registre d'horloge de 32 bits, incrémenté à la fréquence horloge du bus, à savoir 24,576 MHz. Ce registre (appelé 'Cycle Time Register' dans le standard IEEE 1394-1995) est divisé en trois plages (les 12 bits de poids le plus faible, les 13 bits de poids intermédiaire et les 7 bits de poids le plus fort), qui sont donc incrémentées respectivement à des fréquences de 24,576 MHz, 8 KHz et 1 Hz.

En présence d'appareils susceptibles de participer à un trafic isochrone, et pour réaliser la synchronisation de ces appareils, l'un d'eux est élu 'appareil ou noeud maître de cycle' ('Cycle master' selon la terminologie IEEE1394). L'appareil maître de cycle génère un paquet de début de cycle ou de trame isochrone toutes les 125 µs, ce qui correspond à une fréquence de 8 KHz. Ce paquet comporte la valeur du registre d'horloge de 32 bits de l'appareil maître de cycle au moment de l'émission. Un appareil récepteur du paquet asservit son propre registre de 32 bits aux valeurs reçues de l'appareil maître de cycle.

Le document IEEE 1394-1995 mentionné ci-dessus concerne l'architecture du bus série. Un standard additionnel, concernant l'interconnexion de plusieurs bus par l'intermédiaire de ponts ('bridges' selon le vocabulaire anglo-saxon généralement utilisé) est en cours d'élaboration. La dernière version de ce projet actuellement disponible auprès de l'IEEE porte la référence P1394.1 Draft 0.04, et date du 07 février 1999, la version précédente datant du 18 octobre 1997.

Lorsque l'on interconnecte plusieurs bus au moyen d'un pont, il est indispensable de disposer de la même horloge de part et d'autre du pont, pour une interprétation correcte des marqueurs temporels des paquets et une correction des dérives d'horloges.

Dans ce but, l'invention a pour objet un procédé de synchronisation de portails formant un pont reliant des bus de communication, ledit procédé étant caractérisé en qu'il comporte les étapes :
- de détermination d'un portail serveur de cycle dont l'horloge sera prise comme référence pour la synchronisation des autres portails ;
- pour un portail à synchroniser, de détermination de la distance par rapport au portail serveur de cycle et de récupération de l'horloge à partir d'une transmission d'un portail ayant la plus petite distance avec le portail serveur de cycle, la distance d'un portal étant définie par le nombre minimum de portails répéteurs requis pour qu'une information en provenance du portail serveur de cycle parvienne au portail considéré.

Selon un mode de réalisation particulier, la transmission d'un portail relative à l'horloge comprend la distance de ce noeud par rapport au portail serveur de cycle.

Selon un mode de réalisation particulier, le procédé comporte en outre l'étape de synchronisation du portail serveur de cycle sur un dispositif maître de cycle du réseau de communication connecté à un bus.

Selon un mode de réalisation particulier, le pont est un pont sans fil.

L'invention a aussi pour objet un appareil portail pour interfacer un bus câblé et un pont de communication comportant des noeuds formant portail, caractérisé en ce qu'il comporte :
- des moyens de récupération d'horloge à partir d'un signal transmis sur le pont ;
- des moyens de sélection du signal parmi une pluralité de signaux transmis sur le pont par des noeuds et reçus par l'appareil, le signal sélectionné étant le signal transmis par un noeud ayant la distance la plus faible, la distance étant définie comme étant le nombre minimum de noeuds répéteurs entre un noeud et le noeud serveur de cycle, l'horloge du noeud serveur de cycle étant l'horloge maître du pont.

D'autres caractéristiques et avantages de l'invention apparaîtront à travers la description d'un exemple de réalisation particulier non limitatif illustré par les figures jointes parmi lesquelles :
- la figure 1 est un diagramme représentant trois bus IEEE 1394 reliés par un pont constitué de trois portails communiquant entre eux par transmission sans fil,
- la figure 2 est un diagramme illustrant la gigue de phase introduite par l'émission d'un paquet asynchrone,
- la figure 3 est un schéma fonctionnel des circuits d'un pont recevant des données d'un bus et émettant vers le réseau 'sans fil',
- la figure 4 est un schéma fonctionnel des circuits d'un pont recevant des données du réseau 'sans fil' et émettant vers un bus,
- la figure 5 est un schéma d'un circuit de restitution d'une horloge de 8 KHz à partir d'une horloge de 8/N KHz,
- la figure 6 est un diagramme d'une trame utilisée dans l'exemple de réalisation.

Bien que l'exemple de réalisation concerne des bus IEEE 1394 et que la description utilise certains termes issus de la terminologie associée avec ce type de bus, l'invention ne se limite pas au bus IEEE 1394 et peut s'appliquer dans d'autres environnements.

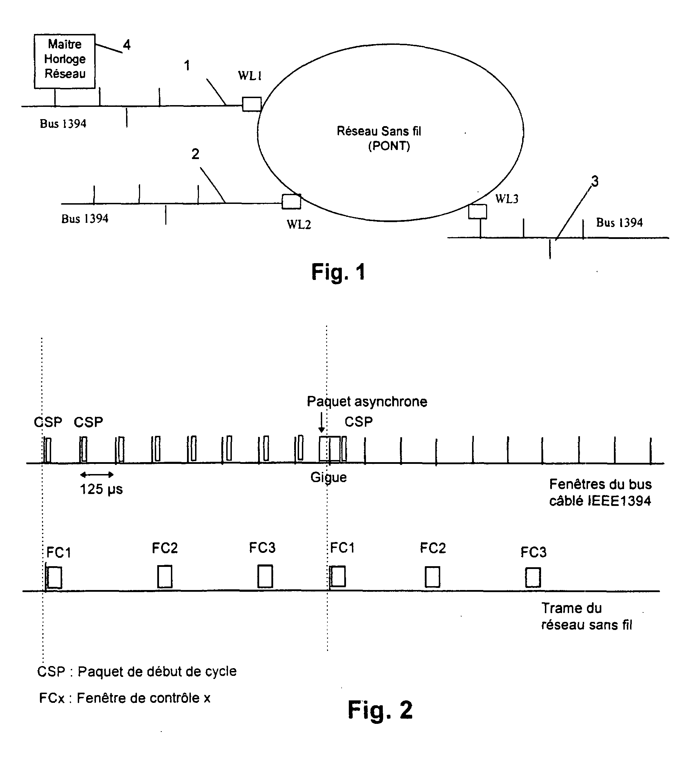

Le réseau de la figure 1 comporte trois bus de type IEEE 1394, référencés 1, 2 et 3, interconnectés par un réseau sans fil 5 auquel les bus sont reliés respectivement par des noeuds dits 'portails' ('portals' selon la terminologie adoptée par le document P1394.1) WL1, WL2 et WL3. Les portails communiquent entre eux par transmission sans fil, en radiofréquences selon le présent exemple de réalisation. On considère que la réunion des portails constitue ce que l'on appellera dans la suite un 'pont' sans fil, réalisant l'interconnexion des bus.

Ces portails sont chacun également membres d'un des bus câblés, et constituent donc des noeuds au sens du standard IEEE 1394 au même titre que les autres appareils connectés aux bus. Dans le but de synchroniser l'ensemble du réseau, un des appareils connecté à l'un des bus est élu 'appareil maître de cycle du réseau' ('net cycle master' en langue anglaise). Il est à noter que cette notion est plus large que celle de 'maître de cycle' qui est limitée à un bus. Cet appareil porte la référence 4 sur la figure 1. L'appareil maître de cycle du réseau, qui peut également être l'un des portails, est désigné par le gestionnaire du pont ('prime portal' selon la terminologie IEEE P1394.1) parmi les appareils maîtres de cycle des différents bus câblés. L'appareil maître de cycle du réseau peut, à titre d'exemple, être celui des appareils ayant potentiellement cette capacité et possédant un numéro de série ou d'identification le plus grand.

Le portail qui est l'appareil maître de cycle du réseau, ou le portail connecté au bus auquel est connecté l'appareil maître de cycle du réseau, est désigné sous le nom de 'serveur de cycle' ('cycle server' en langue anglaise). C'est le serveur de cycle qui est chargé de transmettre aux autres portails l'horloge en provenance de l'appareil maître de cycle du réseau. Les appareils maîtres de cycle des autres bus se caleront sur l'horloge reçue de leur portails.

Selon un mode de réalisation particulier de l'invention, chaque noeud est muni d'un registre dont deux drapeaux indiquent pour le premier drapeau si le noeud est maître de cycle du bus et pour le second drapeau si le noeud est maître de cycle du réseau. Il suffit ainsi à chaque portail de lire ce registre sur le maître de cycle de son bus (l'identificateur du noeud, appelé 'node_id' du maître de cycle est connu et a pour valeur 0). Le portail qui détermine que le maître de cycle de son bus est le maître de cycle du réseau devient alors le maître de cycle du réseau sans fil.

Le réseau sans fil utilise un mécanisme TDMA (pour 'Time Division Multiplex Access' en langue anglaise) pour l'accès au canal de transmission. Ce mécanisme d'accès fait l'objet d'une demande de brevet français déposée au nom de la Demanderesse le même jour que la demande de priorité de la présente demande (21 avril 1998), et ayant pour numéro de dépôt FR 9804983. Parallèlement, le mécanisme d'accès d'un noeud à un bus IEEE 1394 en soi est défini de manière plus précise dans la documentation IEEE relative à ce standard et à laquelle on se référera en cas de besoin.

Une trame TDMA est subdivisée en fenêtres pendant lesquelles les portails peuvent transmettre. L'attribution d'une ou plusieurs fenêtres à un portail se fait par un mécanisme de réservation permettant à un portail d'exprimer ses besoins de transmission et de les confronter aux besoins des autres portails pour un partage optimal du canal sans fil. La réservation se fait par l'intermédiaire des fenêtres dites de contrôle. Une fenêtre, qu'elle soit de contrôle ou de données, est un intervalle de temps prédéterminé dont le début est défini relativement par rapport au début de la trame. Une fenêtre de contrôle par trame est attribuée à chaque appareil susceptible d'émettre. L'information transmise par un portail dans sa fenêtre de contrôle est reprise et propagée dans les fenêtres de contrôle des autres portails. Ainsi, même en connectivité incomplète (à savoir lorsqu'il n'existe pas de liaison directe entre aux moins deux portails), les informations de contrôle sont propagées dans tout le réseau sans fil.

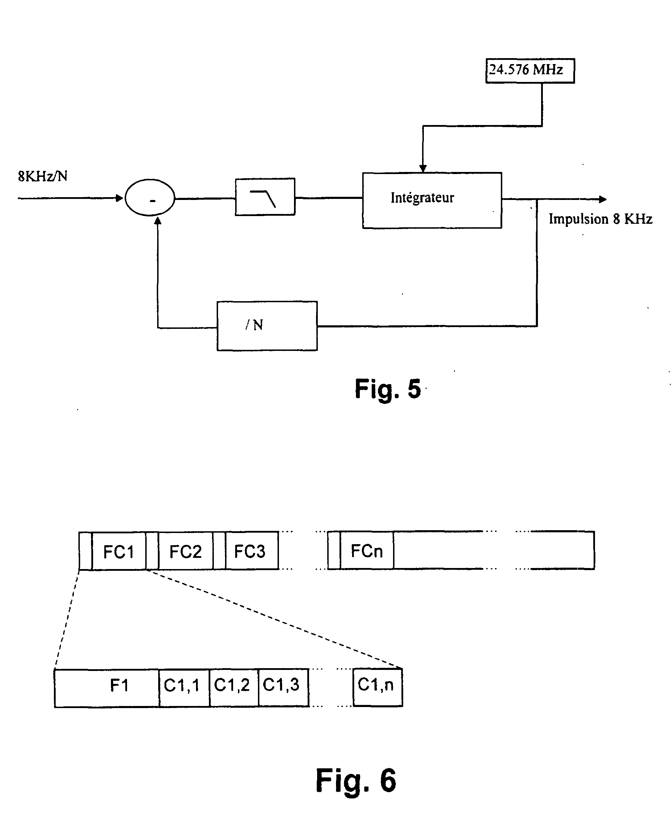

La figure 6 illustre le format d'une trame et d'une fenêtre de contrôle parmi celles présentes dans la trame.

La trame TDMA comporte une zone de n fenêtres de contrôle FCm et une zone de fenêtres de données D, où n est le nombre de portails du pont sans fil. Chaque fenêtre de contrôle FCm comporte une fenêtre dite fixe F, suivie de n fenêtres dites répétées Cm,p. Les fenêtres répétées Cm,p dans une fenêtre de contrôle ont le même ordre que les fenêtres de contrôle dans une trame. En d'autres termes, si un portail X émet la fenêtre de contrôle FC2, alors les fenêtres répétées Cm,2 des autres fenêtres de contrôle seront réservées à la répétition des données de contrôle du portail X.

Bien que toutes les fenêtres de contrôle soient contiguës dans l'exemple illustré par la figure 6, ceci n'est pas forcément toujours le cas: les fenêtres de contrôle et de données peuvent être entrelacées. La contrainte principale est que la position des fenêtres de contrôle dans la trame, ainsi que la correspondance de chaque fenêtre de contrôle avec chaque portail doit être connue par chacun des portails. A titre d'exemple pratique, les fenêtres de contrôle sont numérotées par ordre croissant et présentées dans cet ordre dans les trames. Chaque portail possède également un numéro d'ordre unique qui l'identifie au niveau du pont sans fil. Un portail utilise la fenêtre de contrôle qui correspond à son propre numéro unique.

La fenêtre de contrôle FCm est celle émise par le portail m. La fenêtre fixe de la fenêtre de contrôle FCm comporte des informations destinées aux portails voisins du portail émetteur m. Le contenu de cette fenêtre fixe n'est pas répété par les portails qui la reçoivent. Typiquement, la fenêtre fixe comporte l'adresse du portail émetteur et la distance du portail au serveur de cycle, ainsi qu'une requête de réservation de fenêtres de données en mode 'contention'.

La fenêtre répétée Cm,m de la fenêtre de contrôle FCm comporte des données indiquant si le portail m est serveur de cycle du réseau, ainsi que le cas échéant une requête en réservation en mode 'isochrone' ou en mode 'asynchrone' de fenêtres de données.

Les autres fenêtres répétées de la fenêtre de contrôle FCm comportent les contenus des fenêtres de contrôle reçus directement ou indirectement des portails autres que le portail m. Un portail ne répète qu'une fois les données de contrôle d'un autre portail. Dans ce but, chaque portail mémorise le contenu des fenêtres de contrôle reçues des autres portails et vérifie qu'il ne les a pas déjà répétées antérieurement avant de les recopier au niveau de sa propre fenêtre de contrôle.

On prévoit trois mécanismes de réservation de fenêtres de données :
- Un mécanisme de réservation isochrone : lorsqu'un portail souhaite transmettre un flux isochrone (correspondant à un débit connu et constant), il émet dans sa fenêtre de contrôle une donnée indiquant le nombre de fenêtres par trame dont il estime avoir besoin. Cette réservation est valable pour les trames futures, jusqu'à annulation de la réservation.
- Un mécanisme de réservation asynchrone : à chaque trame, un portail émet dans sa fenêtre de contrôle une donnée indiquant le nombre de fenêtres de données qu'il souhaite réserver dans la trame présente. La réservation n'est valable que pour une trame et doit être renouvelée pour d'autres trames si besoin est.
   Selon les deux mécanismes de réservation ci-dessus, chaque portail du réseau est en charge de répéter dans sa propre fenêtre de contrôle lors de trames futures les réservations de fenêtres effectuées par chaque autre portail connecté au réseau sans fil, telles qu'elles ont été précédemment transmises dans la fenêtre de contrôle réservée à chacun de ces autres portails. Chaque appareil déduit ensuite de ces demandes ainsi que de règles non équivoques quelle sera l'occupation réelle de la prochaine trame. Les règles non équivoques, qui ne font pas l'objet de la présente demande, servent à déterminer quel portail a le droit d'émettre lorsqu'il y a eu contention dans la réservation. Un appareil n'utilise effectivement le nombre de fenêtres réservées qu'une fois qu'il est certain que d'une part tous les appareils connectés au réseau sans fil ont bien reçu l'information, (ce qui dépend de la configuration du réseau), et que d'autre part c'est lui qui est autorisé à émettre (s'il y a eu contention dans la réservation)
- On prévoit enfin un dernier mécanisme dit à contention. De par la configuration du réseau (et des rebonds successifs nécessaires à la propagation des réservations), un portail peut avoir à patienter un certain nombre de trames entre le moment de la réservation, et le moment de l'envoi effectif des données. Il se peut cependant que la trame à venir s'avère peu chargée. Le mécanisme à contention peut être utilisé dans un tel cas. Le portail doit utiliser la fenêtre de contrôle pour indiquer le nombre de fenêtres qu'il va utiliser: ce seront des fenêtres non encore réservées. Il insère ses données dans la même trame que sa fenêtre de contrôle, dans des fenêtres de données qui suivent sa propre fenêtre de contrôle. Il est clair que si deux portails effectuent la même transmission au même moment, il y aura collision. La phase de transmission doit donc s'accompagner d'une phase d'accusé-réception, générée par le destinataire.

Le réseau sans fil utilise une trame isochrone calée sur un sous-multiple de l'horloge 8 kHz, c'est à dire une horloge à 8/N KHz. Avantageusement, on prendra pour N une puissance p de deux, et selon le présent exemple de réalisation, au maximum p=6. L'horloge est obtenue en considérant les 13-p bits de la seconde plage du registre d'horloge. Cette horloge est obtenue dans un premier temps, conformément à la norme IEEE 1394, par le pont WL1 (serveur de cycle) connecté au bus auquel est relié l'appareil maître de cycle du réseau 4.

On choisit une horloge 8/N kHz dans le but de réduire la bande passante consacrée aux données de contrôle par rapport aux données utiles dans les trames. Selon le présent exemple, N est choisi égal à 8. En raison des contraintes de transmission propres à la technique TDMA (où l'un des problèmes critiques est le contrôle automatique de gain ('CAG') côté réception qui doit s'effectuer chaque fois que l'émetteur change, le CAG nécessitant ainsi l'insertion d'un temps mort de 2 à 3 µs avant chaque trame), la durée d'une trame ne peut pas descendre en dessous d'une certaine valeur. On considère qu'une durée de 5µs est la valeur minimale pour ne pas perdre trop d'efficacité au niveau de la transmission. Comme déjà mentionné, les fenêtres de contrôle servent à signaler aux autres portails les intentions d'émission de chaque portail dans la trame. Il en résulte qu'il doit y avoir une fenêtre de contrôle par portail et par trame. Ces contraintes font que la perte de bande passante (information de contrôle / informations utiles) est plus forte sur une trame courte. L'utilisation d'une trame calée sur une horloge de 8/N KHz permet donc de réduire cette perte de bande passante.

La norme IEEE 1394 prévoit que l'accès au support de transmission se fait selon un principe d'arbitrage. Un noeud maître (élu au démarrage d'un bus) a le rôle d'arbitre pour décider de l'accès des autres noeuds au bus. Cependant, la norme ne prévoit pas la notion de fenêtres de données pour la transmission des données asynchrones. Ainsi, lorsqu'un transfert asynchrone est lancé suite à une négociation pour l'obtention du bus, on ne connaît pas à priori la durée de ce transfert. Il en résulte qu'un noeud peut être amené à patienter pendant un intervalle de temps de durée variable lorsqu'il sollicite l'obtention du bus.

Lors de la transmission de l'horloge du bus, le noeud maître doit générer une impulsion de synchronisation toutes les 125 µs. Ceci est réalisé par l'envoi d'un paquet ('Cycle start packet' ou CSP) dont le début constitue l'impulsion de synchronisation. Cependant il se peut que le bus soit occupé au moment où le maître de cycle du bus doit générer le paquet. Ce demier doit donc attendre la fin de l'émission courante pour obtenir l'accès au bus. Il insère alors dans le paquet émis la valeur de son registre de temps pour que les autres noeuds puissent asservir leur horloge sur sa référence et effectuer la correction nécessaire. Cette gigue sur le début du paquet (estimée au maximum à 78 µs) correspond à la durée maximale d'un paquet asynchrone tel que défini dans le document IEEE 1394 et à la durée de la phase d'accusé réception mentionnée à l'annexe E de ce même document. La figure 2 illustre l'influence de la gigue sur l'émission du paquet de début de trame. Par ailleurs, selon l'exemple de la figure 2, les fenêtres de contrôle des portails sont répartis sur l'ensemble de la trame TDMA du réseau sans fil, et non concentrés au début de celle-ci comme dans l'exemple de la figure 6 décrite précédemment.

La transmission de l'horloge sur un bus IEEE 1394 comporte deux aspects: la transmission de la fréquence d'horloge (8 KHz), et la transmission du temps en valeur absolue, sous la forme de valeurs du registre de temps. Selon le standard IEEE 1394, on prévoit de réaliser ces deux aspects en même temps : toutes les 125 µs, le noeud maître de cycle du réseau génère un paquet contenant la valeur de son registre de temps au moment de l'émission (ceci en raison de la gigue du bus).

Selon l'invention, lors de la transmission de l'horloge sur le réseau sans fil, c'est-à-dire au-delà du bus 1394 auquel est relié le maître de cycle du réseau, on dissocie ces deux aspects (transmission de la fréquence et transmission de la valeur absolue de l'horloge).

Concernant tout d'abord l'émission de l'horloge sur le réseau sans fil, deux cas se présentent: soit le portail déterminant l'horloge de la partie sans fil du réseau est connecté à l'appareil maître du réseau par un bus IEEE 1394, soit il est lui-même cet appareil maître de cycle du réseau.

Dans le premier cas, une gigue maximale de 78 µs peut exister sur le début du paquet de début de cycle ('cycle start packet') envoyé au portail 'serveur de cycle' par l'appareil maître du réseau: c'est la gigue dont l'origine a été expliquée à l'aide de la figure 2. Selon le présent exemple de réalisation, l'insertion de la fenêtre de contrôle dans la trame n'est pas directement déclenchée par la réception du paquet de début de cycle sur le bus câblé, mais plutôt déterminée par le registre de temps du portail serveur de cycle. Si l'on suppose qu'une trame TDMA débute toutes les 1 ms, alors une trame TDMA doit débuter tous les 131047 coups d'horloge. On élimine ainsi la gigue dans le rythme transmis, en calant le début de trame TDMA sur le réseau sans fil sur l'horloge du portail serveur de cycle. Il faut noter que le registre de temps du portail est néanmoins asservi toutes les 125 µs par les valeurs reçues des paquets de début de cycle du noeud maître du réseau, de façon identique à tout autre noeud d'un bus IEEE 1394 câblé.

Dans le cas où le portail serveur de cycle est l'appareil maître du réseau, il n'y a pas de gigue du type décrit ci-dessus. L'horloge du portail serveur de cycle est en roue libre.

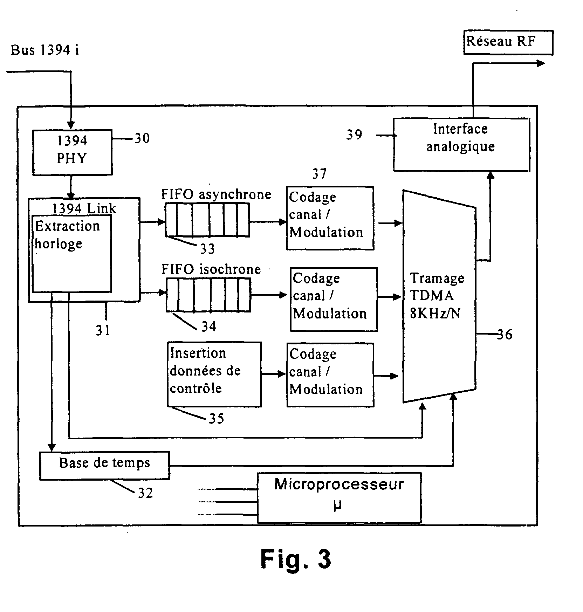

La figure 3 représente les circuits de connexion au bus IEEE 1394 câblé et la partie émission d'un portail. Le portail comporte une interface physique 30, un circuit de démodulation et de décodage canal 31 qui extrait les valeurs des bits du registre d'horloge des paquets de début de cycle ('Cycle start packets' selon la terminologie du document IEEE 1394), une base de temps 32 constituée par le registre d'horloge du portail, incrémenté au rythme d'une horloge interne comportant une boucle à verrouillage de phase munie d'un oscillateur de fréquence de base 24,576 MHz et verrouillable sur les paquets de début de cycle du bus câblé, une pile FIFO asynchrone 33 pour contenir les données utiles pour la transmission de paquets asynchrones, une pile FIFO isochrone 34 pour contenir les données utiles pour la transmission isochrone dans les fenêtres isochrones des trames TDMA, ainsi qu'un circuit 35 d'insertion des données de contrôle, notamment des données destinées à la fenêtre de contrôle de la trame TDMA réservée au portail. Ce dernier circuit 35 insère également le mot de synchronisation en début de sa fenêtre de contrôle. Les deux piles FIFO 33 et 34, ainsi que le circuit d'insertion 35 sont reliés chacun à un circuit de codage canal et de modulation (seul le circuit 37 est référencé), puis à un multiplexeur 36 contrôlé par un microcoprocesseur µ qui gère également les compensations des délais de traitement décrites ci-après. Les diverses connexions du microprocesseur, qui est responsable de l'ensemble de la gestion du portail, ne sont pas illustrées sur la figure 3 pour ne pas nuire à la clarté du schéma. Le circuit 36 effectue également l'assemblage de la trame TDMA. Une interface analogique 39 effectue la liaison avec le réseau sans fil en fréquence radio et notamment les transpositions vers la bande de fréquences requise.

Il a été constaté que le temps de traitement à l'émission ou à la réception dans la partie sans fil du réseau n'est pas négligeable par rapport au marquage temporel des paquets de données. Ce retard correspond à la modulation et au codage canal au niveau de l'émetteur, et au décodage canal et à la démodulation au niveau du récepteur. Selon le présent exemple de réalisation, ce temps de traitement est compensé tant au niveau de l'émetteur que du récepteur. Un portail émetteur, ayant un temps de traitement sensiblement fixe, ajoute le nombre de coups d'horloge correspondant à ce temps de traitement à la valeur d'horloge de son registre de temps, de sorte que la valeur d'horloge incluse dans la fenêtre de contrôle corresponde au moment de l'émission effective de la fenêtre de contrôle. De même, un portail récepteur ajoute à la valeur d'horloge reçue un nombre de coups d'horloge correspondant à son temps de traitement. Les temps de traitement à l'émission et à la réception peuvent être mémorisés dans des registres au niveau de chaque portail.

On décrira dans ce qui suit la récupération de la fréquence d'horloge, puis la récupération de la valeur d'horloge au niveau de chaque portail.

Au niveau d'un portail autre que le portail serveur de cycle, la récupération du rythme d'horloge est effectuée via une boucle à verrouillage de phase comportant un oscillateur contrôlé de fréquence de base 24,576 MHz.

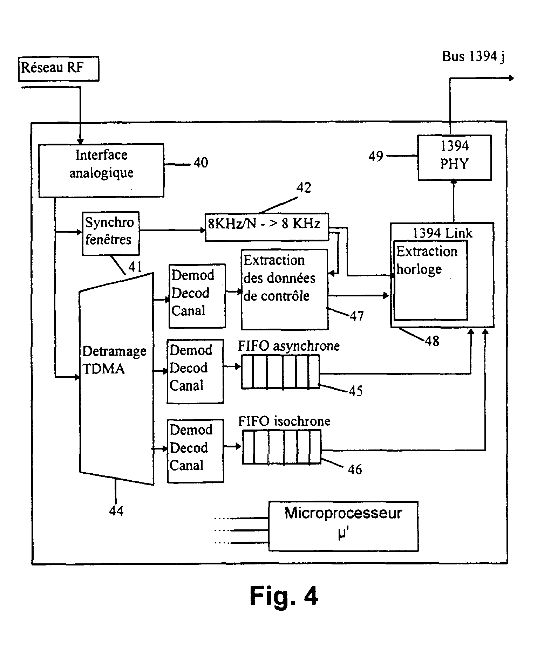

La figure 4 est un schéma des circuits de réception et de connexion à un bus 1394 d'un des portails de la figure 1. Le portail de la figure 4 comporte une interface analogique 40 pour la réception des signaux RF réalisant notamment les transpositions vers la bande de fréquence de base, un extracteur 41 de synchronisation des paquets récupérant les début des fenêtres de contrôle et alimentant une boucle à verrouillage de phase 42 de rétablissement de l'horloge 8 kHz à partir des débuts de fenêtres de contrôle générés à une fréquence de 8/N kHz, un circuit 43 de démodulation et de décodage canal du contenu de la trame, cette dernière étant démultiplexée par un démultiplexeur 44 connecté à une pile FIFO asynchrone 45, une pile FIFO isochrone 46 et une mémoire des données de contrôle 47 comportant également un registre de temps du portail. Le portail comporte également un circuit 48 de liaison IEEE 1394 et une interface physique 49 avec le bus IEEE 1394 câblé associé au portail. En demier lieu, le portail comporte un microprocesseur µ'.

La figure 5 est un schéma du circuit 42 de la figure 4. Les valeurs numériques figurant sur la figure sont données à titre d'exemple. L'horloge de 8 KHz restituée doit avoir une gigue comparable à la gigue de l'horloge 8 KHz d'un bus IEEE 1394 câblé, cette dernière étant asservie par les paquets de début de cycle à la fréquence de 8kHz, au lieu de 8/N KHz pour les portails du réseau sans fil. Cette gigue correspond à +/- 1/2 période de 24.576 MHz.

Pendant une trame, chaque portail reçoit de manière intelligible des fenêtres de contrôle d'un ou plusieurs autres portails. Il ne reçoit pas forcément les fenêtres de contrôle de chaque autre portail, étant donné la connectivité non totale de la partie sans fil du réseau. Le portail sélectionne une des fenêtres de contrôle reçues, en privilégiant la fenêtre contenant la plus petite distance par rapport au portail serveur de cycle connecté au même bus que l'appareil maître de cycle du réseau. C'est de cette fenêtre de contrôle que le portail utilise pour synchroniser sa propre horloge. Chaque fenêtre de contrôle comporte un mot de synchronisation permettant d'en repérer le début, et comporte dans sa fenêtre fixe l'identification de l'émetteur, ainsi que la distance de celui-ci par rapport au portail serveur de cycle. Chaque fois que la fenêtre de contrôle sélectionnée est repérée par le portail, ce dernier génère une impulsion à destination de sa boucle à verrouillage de phase.

On définit la distance entre un portail de la partie sans fil du réseau et le portail générant la référence temporelle de cette partie sans fil du réseau (portail serveur de cycle) comme étant le nombre minimum de 'sauts' entre ce portail et le portail serveur de cycle. Il s'agit, dans le présent exemple de réalisation, du nombre de trames TDMA nécessaires pour que le contenu de la fenêtre de contrôle du portail serveur de cycle parvienne à l'autre portail. De façon pratique, les portails pouvant être atteints par liaison sans fil directement par le portail serveur de cycle sont à la distance '1' de ce dernier. Les portails incluent la distance qui les sépare du portail serveur de cycle dans leur fenêtre de contrôle. Un portail choisit, parmi toutes les distances qu'il reçoit de manière intelligible dans les fenêtres de contrôle, la distance la plus faible. Cette distance, incrémentée de 1, est sa propre distance par rapport au portail serveur de cycle. Les distances sont transmises dans toutes les fenêtres de contrôle. Le portail serveur de cycle aura une distance de 0.

Avantageusement, la synchronisation est toujours effectuée sur la base de la même fenêtre de contrôle, tant qu'elle est reçue de manière intelligible. Ainsi, le temps d'acheminement ne varie pas de trame à trame.

La transmission et l'extraction de la valeur d'horloge transmise par le portail serveur de cycle est effectuée de la façon suivante :

Dans la trame du réseau sans fil, la position et la taille de chaque fenêtre de contrôle sont fixes, de sorte qu'il n'y a pas de gigue sur le début d'une fenêtre de contrôle Cm d'une trame à l'autre. Il en résulte que la transmission des poids faibles du registre de temps du portail serveur de cycle (correspondant à l'horloge 24.576 MHz) est inutile.

En soi, la synchronisation des valeurs d'horloge des portails est nécessaire pour réaliser une interprétation correcte des étiquettes temporelles définies dans le standard IEC 61883.

Il existe deux possibilités pour transmettre cette valeur de temps :
- Soit le portail serveur de cycle envoie explicitement la valeur nécessaire de son registre de temps sur détection de cet événement (à savoir les 7 bits de poids fort décrivant les secondes, et les (13-N) bits de poids intermédiaires décrivant la valeur du compteur 8/N kHz).
   Or, il n'est utile de transmettre une valeur de temps complète qu'au démarrage d'un noeud, pour qu'il puisse acquérir la valeur absolue comprise dans le registre du portail serveur de cycle: la transmettre à chaque fenêtre de contrôle demanderait trop de bande passante.
   • Soit le portail serveur de cycle envoie en permanence dans sa fenêtre de contrôle un sous-ensemble des bits de son registre de temps, en les décalant à chaque trame. Ceci peut être réalisé de la façon suivante : 2 bits de chaque fenêtre fixe de chaque fenêtre de contrôle sont dédiés à cet usage : le premier bit indique si le second bit est le bit de poids le plus faible de la valeur d'horloge (bits non transmis mis à part ― voir ci-dessous) ou s'il s'agit d'un autre bit quelconque. Le second bit est un bit de la valeur d'horloge. Les valeurs de bits courants sont transmis du poids faible vers le poids fort. Ainsi un portail cherchant à s'initialiser attend le signal indiquant la présence du bit de poids le plus faible, et commence le rafraîchissement de son registre de temps bit à bit au fil des trames, en progressant vers les poids forts. Il est important que même lors du rafraîchissement du registre, celui-ci continue à s'incrémenter au rythme de l'horloge locale générée par la boucle à verrouillage de phase.

Si l'on considère qu'une trame TDMA est transmise toutes les 1 KHz, alors seuls les 17 bits de poids fort du registre de temps sont significatifs et seront effectivement transmis selon la seconde possibilité.

Les 12 bits de la plage de poids le plus faible, ainsi que les p bits de poids le plus faible de la partie médiane du registre d'horloge du portail sont déterminées par le portail lui-même, en fonction de son temps de traitement propre.

Côté émetteur, on considère que cette plage de 12 bits non émise est à 0 au moment de l'émission d'une fenêtre. Pour compenser le temps de traitement à l'émission, l'émission est déclenchée un nombre de coups d'horloge prédéterminé avant que le compteur n'atteigne la valeur correspondant à la plage de 12 bits nuls.Le temps de traitement à l'émission est déterminé par des mécanismes de calibration, par exemple au moment de la conception de l'émetteur.

Côté récepteur, une correction similaire du temps de traitement à la réception est effectuée.

En résumé, la propagation de l'horloge sur le réseau sans fil se fait selon le mécanisme suivant :

Chaque portail dispose d'un registre de temps. Ce registre de temps est utilisé par chaque portail pour déclencher l'émission de sa propre fenêtre de contrôle dans le cadre d'une trame TDMA.

Chaque portail réalise un asservissement de son registre de temps. Cet asservissement dépend de la topologie du réseau: si le portail est l'appareil maître de cycle du réseau, alors, il n'y a pas d'asservissement sur son registre de temps. Si le portail est connecté au même bus IEEE 1394 que l'appareil maître de cycle du réseau (et qu'il est le seul portail sur ce bus, sinon une résolution de contention est à prévoir entre les portails prétendants), alors le portail, dénommé 'serveur de cycle du réseau', asservit son registre de temps sur les paquets de début de cycle reçus de son bus (comme tout noeud 'esclave de cycle' IEEE 1394). Dans tous les autres cas, le portail doit asservir son registre de temps sur la réception de la fenêtre de contrôle à distance la plus faible du portail 'serveur de cycle'.

L'horloge ainsi récupérée par chaque portail est utilisée pour le bus auquel le portail est connecté.

Bien que les circuits de réception et d'émission des figures 3 et 4 soient représentés de manière séparée dans la description, il est clair que ces circuits peuvent être intégrés dans un seul appareil émetteur/récepteur sur le réseau sans fil. Il est bien évident que dans ce cas certains des éléments de ces circuits n'ont pas à être dédoublés : microprocesseur, circuit 1394 physique etc... géreront aussi bien la réception que l'émission. Il est à la portée de l'Homme du Métier de modifier et de combiner les circuits de réception et d'émission dans un même appareil sans introduire de redondance.

## Revendications

1. Procédé de synchronisation de portails (WL1, WL2, WL3) formant un pont reliant des bus de communication (1, 2, 3), ledit procédé étant **caractérisé en qu**'il comporte les étapes :
- de détermination d'un portail serveur de cycle (WL1) dont l'horloge sera prise comme référence pour la synchronisation des autres portails (WL2, WL3);
- pour un portail à synchroniser (WL2, WL3), de détermination de la distance par rapport au portail serveur de cycle (WL1) et de récupération de l'horloge à partir d'une transmission d'un portail ayant la plus petite distance avec le portail serveur de cycle, la distance d'un portal étant définie par le nombre minimum de portails répéteurs requis pour qu'une information en provenance du portail serveur de cycle parvienne au portail considéré.

2. Procédé selon la revendication 1, **caractérisé en ce que** la transmission d'un portail relative à l'horloge comprend la distance de ce noeud par rapport au portail serveur de cycle.

3. Procédé selon l'une des revendications 1 ou 2, **caractérisé en ce qu'**il comporte en outre l'étape de synchronisation du portail serveur de cycle sur un dispositif maître de cycle du réseau de communication connecté à un bus.

4. Procédé selon l'une des revendications 1 à 3, **caractérisé en ce que** le pont est un pont sans fil.

5. Appareil portail (WL2, WL3) pour interfacer un bus câblé (2, 3) et un pont de communication comportant des noeuds formant portail, **caractérisé en ce qu'**il comporte :
- des moyens (40, 41, 42, 47) de récupération d'horloge à partir d'un signal (FCx) transmis sur le pont ;
- des moyens (µ') de sélection du signal parmi une pluralité de signaux transmis sur le pont par des noeuds et reçus par l'appareil, le signal sélectionné étant le signal transmis par un noeud ayant la distance la plus faible, la distance étant définie comme étant le nombre minimum de noeuds répéteurs entre un noeud et le noeud serveur de cycle, l'horloge du noeud serveur de cycle étant l'horloge maître du pont.

6. Appareil selon la revendication 5, **caractérisé en ce que** le pont est un pont sans fil.
